(19) Europäisches Patentamt / European Patent Office / Office européen des brevets

(11) **EP 4 395 159 A1**

(12) **EUROPEAN PATENT APPLICATION**
published in accordance with Art. 153(4) EPC

(43) Date of publication:
**03.07.2024 Bulletin 2024/27**

(21) Application number: **22866182.3**

(22) Date of filing: **10.06.2022**

(51) International Patent Classification (IPC):
**H02P 21/14** (2016.01)  **H02P 21/13** (2006.01)
**H02P 21/00** (2016.01)  **H02P 25/022** (2016.01)
**H02P 6/10** (2006.01)

(86) International application number:
**PCT/CN2022/097988**

(87) International publication number:
**WO 2023/035706 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.09.2021 CN 202111045630**

(71) Applicant: **BEIJING NATIONAL NEW ENERGY VEHICLE TECHNOLOGY INNOVATION CENTER CO., LTD.
Beijing 102600 (CN)**

(72) Inventors:
• **LIU, Chaohui
  Beijing 102600 (CN)**
• **WANG, Dafang
  Beijing 102600 (CN)**

• **XIE, Hao
  Beijing 102600 (CN)**
• **SHEN, Jinliang
  Beijing 102600 (CN)**
• **LI, Qi
  Beijing 102600 (CN)**
• **YANG, Lianghui
  Beijing 102600 (CN)**
• **GE, Shancheng
  Beijing 102600 (CN)**
• **WANG, Shichang
  Beijing 102600 (CN)**
• **YUAN, Chengyin
  Beijing 102600 (CN)**

(74) Representative: **Wächter, Jochen et al
Kroher-Strobel
Rechts- und Patentanwälte PartmbB
Bavariaring 20
80336 München (DE)**

(54) **PERMANENT MAGNET SYNCHRONOUS MOTOR COMPENSATION CONTROL METHOD AND SYSTEM**

(57) The present invention discloses a compensation control method and system for a permanent magnet synchronous motor, the method comprising: calculating a PI control output voltage $V_P$ of the permanent magnet synchronous motor (S102); performing disturbance observation on the permanent magnet synchronous motor, and calculating a disturbance compensation voltage $V_L$ of the permanent magnet synchronous motor (S104); calculating a repetitive control output voltage $V_R$ (S106); acquiring a final output voltage $V_e$ after compensation control in a current cycle based on the PI control output voltage $V_P$, the disturbance compensation voltage $V_L$ and the repetitive control output voltage $V_R$ (S 108). The compensation control method for the permanent magnet synchronous motor of the present invention suppresses disturbance caused by three-phase imbalance by the disturbance observation voltage, and reduces steady-state error in output signal control by the repetitive control voltage and the PI control output voltage. When the three-phase impedance changes during actual motor operation, the motor will not experience rotational speed or torque pulsation, ensuring normal motor operation and system stability, and effectively reduces the amplitude of second-order harmonics caused by three-phase imbalance.

| | |
|---|---|
| calculate PI control output voltage of the permanent magnet synchronous motor | S102 |
| performed disturbance observation on the permanent magnet synchronous motor, and calculate disturbance compensation voltage of the permanent magnet synchronous motor | S104 |
| calculate a repetitive control output voltage | S106 |
| acquire a final output voltage after compensation control of a current cycle based on the PI control output voltage, the disturbance compensation voltage and the repetitive control output voltage | S108 |

Fig.1

**Description**

**FIELD OF TECHNOLOGY**

The present invention relates to the technical field of motor control, more specifically, relates to a compensation control method and system for a permanent magnet synchronous motor.

**BACKGROUND**

Permanent magnet synchronous motors have the advantages of high power density, high efficiency and simple structure, and are widely used in various industries. When manufacturing permanent magnet synchronous motors, it is usually necessary to ensure three-phase impedance balance. When the motor is working for a long time, the temperature drift of the resistance caused by the heating of the motor or the insufficient alignment of the rotor during manufacture will cause the three-phase impedance of the motor to be unbalanced. In addition, under certain working conditions, the impedance of the transmission line is higher than the internal impedance of the motor, and the imbalance of the transmission line impedance will further aggravate the imbalance of the three-phase impedance of the motor. When the permanent magnet synchronous motor is in a three-phase unbalanced state, voltage and current fluctuations will occur during operation, resulting in torque and speed fluctuations, thereby affecting the normal operation of the motor.

The existing three-phase unbalanced control method of permanent magnet synchronous motor mainly decomposes the positive and negative sequences of the current, and then controls the voltage and current of the positive and negative sequences respectively, so that the part of the voltage and current that causes the pulsation tends to zero. This control method does not take into account the characteristics of the motor model but only controls the interference generated by the unbalanced transmission line. The positive and negative sequence decomposition method will increase the delay link in the decomposition process and affect the control of the motor, and adding multiple closed-loop control systems will increase the complexity of the system and cause the system to be unstable.

Therefore, there is a special need for a control method to overcome the problems that lead to system instability.

**SUMMARY**

The objective of the present invention is to propose a compensation control method for a permanent magnet synchronous motor that leads to system stability and does not affect the basic control strategy.

To realize the above objective, the present invention provides a compensation control method for a permanent magnet synchronous motor, comprising: calculating a PI control output voltage $V_P$ of the permanent magnet synchronous motor; performing disturbance observation on the permanent magnet synchronous motor, and calculating a disturbance compensation voltage $V_L$ of the permanent magnet synchronous motor; calculating a repetitive control output voltage $V_R$; acquiring a final output voltage $V_e$ after compensation control in a current cycle based on the PI control output voltage $V_P$, the disturbance compensation voltage $V_L$ and the repetitive control output voltage $V_R$.

Preferably, acquiring the PI control output voltage $V_P$ by the following steps: collecting an angular velocity, an electrical angle and three-phase currents ia, ib, ic of the permanent magnet synchronous motor in real time; based on the electrical angle, converting the three-phase currents ia, ib, and ic from a three-phase coordinate system to an actual output current id of a d-axis of the motor and an actual output current iq of a q-axis of the motor under a d-q coordinate system; based on the angular velocity, acquiring a q-axis command current $\overset{.*}{i}_q$ of the permanent magnet synchronous motor; based on the q-axis command current $\overset{.*}{i}_q$ and the actual output current iq of the q-axis, acquiring a q-axis command voltage $U_q^p$; based on an initial value of a d-axis command current $\overset{.*}{i}_d$ and the actual output current id of the d-axis, acquiring a d-axis command voltage $U_d^p$; wherein the PI control output voltage $V_p$ is:

$$V_P = \begin{pmatrix} U_d^P \\ U_q^P \end{pmatrix}.$$

Preferably, the three-phase currents ia, ib, and ic are converted from the three-phase coordinate system to a motor α-axis output current iα and β-axis output current iβ under an α-β coordinate system through Clark coordinate transformation; the motor α-axis output current iα and β-axis output current iβ under the α-β coordinate system are converted to the actual output current id of the d-axis of the motor and the actual output current iq of the q-axis of the motor under the d-q coordinate system through Park coordinate transformation.

Preferably, product $K_s$ of Clark coordinate transformation matrix $K_{s1}$ and Park coordinate transformation matrix

K$_{s2}$ is:

$$K_s = \frac{2}{3}\begin{bmatrix} \cos\theta & \cos(\theta - \frac{2}{3}\pi) & \cos(\theta + \frac{2}{3}\pi) \\ \sin\theta & \sin(\theta - \frac{2}{3}\pi) & \sin(\theta + \frac{2}{3}\pi) \\ \frac{1}{2} & \frac{1}{2} & \frac{1}{2} \end{bmatrix}$$

wherein,

$$K_{s1} = \frac{2}{3}\begin{bmatrix} 0 & -\frac{\sqrt{3}}{2} & \frac{\sqrt{3}}{2} \\ 1 & -\frac{1}{2} & -\frac{1}{2} \\ \frac{1}{2} & \frac{1}{2} & \frac{1}{2} \end{bmatrix}, \quad K_{s2} = \begin{bmatrix} -\sin\theta & \cos\theta & 0 \\ \cos\theta & \sin\theta & 0 \\ 0 & 0 & 1 \end{bmatrix},$$

K$_s$ is the product of the Clark coordinate transformation matrix and the Park coordinate transformation matrix, and $\theta$ is the electrical angle.

Preferably, the disturbance compensation voltage V$_L$ of the permanent magnet synchronous motor is acquired by the following steps: calculating a disturbance observation reference voltage $\hat{V}_k$ of the permanent magnet synchronous motor; calculating the disturbance compensation voltage V$_L$ based on the disturbance observation reference voltage $\hat{V}_k$, wherein,

$$V_L = C_p(z)\left(V_e^{-1} - \hat{V}_k\right), \quad \hat{V}_k = \begin{pmatrix} \hat{U}_d \\ \hat{U}_q \end{pmatrix}$$

$$\hat{U}_d = R_s^* i_d + L_s^* \frac{di_d}{dt} - \omega_e L_s^* i_q$$

$$\hat{U}_q = R_s^* i_q + L_s^* \frac{di_q}{dt} + \omega_e L_s^* i_d + \omega_e \varphi_f$$

wherein, $C_p(z)$ is filter function of the disturbance observation, $V_e^{-1}$ is the final output voltage after compensation control in the previous cycle, $\hat{U}_d$, $\hat{U}_q$ are d-axis and q-axis reference voltages for disturbance observation, $R_s^*$ is a three-phase average estimated resistance of an equivalent permanent magnet synchronous motor, $L_s^*$ is a three-phase average estimated inductance of the equivalent permanent magnet synchronous motor, i$_d$ and i$_q$ are actual output currents of the d-axis and q-axis, $\omega_e$ is the electrical angular velocity of the motor, $\omega_e = P^*\omega$, P is a number of pole pairs of the motor, $\omega$ is the angular velocity, and $\varphi_f$ is a flux linkage of a motor rotor.

Preferably, the repetitive control output voltage V$_R$ is calculated by the following formulas:

$$V_R = G_{RC}(z)e(z), \quad G_{RC}(z) = \frac{z^{-N}C(z)}{1 - Q(z)z^{-N}}$$

wherein, $G_{RC}(z)$ is transfer function of repetitive control, e(z) is difference between the command current $\begin{pmatrix} i_d^* \\ i_q^* \end{pmatrix}$ of the d-axis and q-axis and actual output current $\begin{pmatrix} i_d \\ i_q \end{pmatrix}$ of the d-axis and q-axis, N is a ratio of a period of an error signal to a sampling interval, C(z) is compensation transfer function, $C(z) = K_r z^j / S(z)$, j is a constant, $K_r$ is repetitive control gain, S(z) is a low-pass filter, Q(z) is a low-pass filter or a constant close to 1.

Preferably, the final output voltage $V_e$ after compensation control of the current cycle is acquired by the following formula:

$$V_e = V_P + V_L + V_R.$$

The present invention also provides a compensation control system for a permanent magnet synchronous motor, comprising: a motor current acquisition module, the motor current acquisition module is configured to collect real-time three-phase currents ia, ib, ic of the permanent magnet synchronous motor; an angular velocity acquisition module, the angular velocity acquisition module is configured to collect real-time angular velocity of the permanent magnet synchronous motor; an electrical angle acquisition module, the electrical angle acquisition module is configured to collect real-time electrical angle of the permanent magnet synchronous motor; a current coordinate transformation module, the current coordinate transformation module is respectively connected with the motor current acquisition module and the electrical angle acquisition module, and is configured to convert currents under a three-phase coordinate system to actual output current id of a d-axis and actual output current iq of a q-axis of the motor under a d-q coordinate system; PI control module, the PI control module is connected with the angular velocity acquisition module and the current coordinate transformation module, and is configured to perform PI control according to the real-time angular velocity, the actual output current id of the d-axis of the motor, and the actual output current iq of the q-axis, and output a PI control output voltage $V_P$ to a final output voltage $V_e$ calculation module; a disturbance compensation module, the disturbance compensation module is connected with the current coordinate transformation module and the final output voltage $V_e$ calculation module, and is configured to perform disturbance observation on the permanent magnet synchronous motor according to the actual output current id of the d-axis and the actual output current iq of the q-axis and output a disturbance compensation voltage $V_L$ to the final output voltage $V_e$ calculation module; a repetitive control module, the repetitive control module is connected with the PI control module, the current coordinate transformation module and the final output voltage $V_e$ calculation module, and is configured to perform repetitive control according to the actual output current id of the d-axis and the actual output current iq of the q-axis and output a repetitive control output voltage $V_R$ to the final output voltage $V_e$ calculation module; the final output voltage $V_e$ calculation module, the final output voltage $V_e$ calculation module is respectively connected with the PI control module, the disturbance compensation module and the repetitive control module, and is configured to acquire the final output voltage $V_e$ after compensation control in a current cycle.

Preferably, the PI control module comprising a first PI controller, a second PI controller and a third PI controller, difference between the angular velocity and a target angular velocity is used as an input of the first PI controller, and an output of the first PI controller is used as a q-axis command current $i_q^*$; difference between the q-axis command current $i_q^*$ and the actual output current iq of the q-axis is used as an input of the second PI controller, and an output of the second PI controller is used as a q-axis command voltage $U_q^p$; difference between an initial value of the d-axis command current $i_q^*$ and the actual output current id of the d-axis is used as an input of the third PI controller, and an output of the third PI controller is used as a d-axis command voltage $U_d^p$ ; wherein the PI control output voltage V_p is: $V_P = \begin{pmatrix} U_d^P \\ U_q^P \end{pmatrix}$ .

Preferably, the disturbance compensation module comprising a disturbance observer and a bandpass filter, the repetitive control module comprising a repetitive controller, using the actual output current id of the d-axis and the actual output current iq of the q-axis as an input of the disturbance observer, and using an output of the disturbance observer as the d-axis and q-axis reference voltages for disturbance observation; using difference between the final output voltage after compensation control in the previous cycle and the d-axis and q-axis reference voltages for disturbance observation as an input of the bandpass filter, and using an output of the bandpass filter as the disturbance compensation voltage V_L; using difference between the q-axis command current $i_q^{.*}$ and the actual output current iq of the q-axis and difference between an initial value of the d-axis command current $i_d^{.*}$ and the actual output current id of the d-axis as an input of the repetitive controller, and using an output of the repetitive controller as the repetitive control output voltage V_R; the final output voltage V_e calculation module adding the PI control output voltage V_P, the disturbance compensation voltage V_L and the repetitive control output voltage V_R, and using a sum of the addition as the final output voltage V_e.

The beneficial effects of the present invention are: the compensation control method for a permanent magnet synchronous motor of the present invention suppresses the disturbance caused by the three-phase imbalance through the disturbance observation voltage, and reduces the steady-state error of the output signal control by the repetitive control voltage and PI control output voltage. When the three-phase impedance changes when the actual motor is running, the motor will not have rotational speed or torque ripples, ensuring normal operation of the motor and stability of the system, and effectively reducing the second-order harmonic amplitude caused by three-phase imbalance.

**BRIEF DESCRIPTION OF THE DRAWINGS**

The above and other objects, features and advantages of the present invention will become more apparent by describing the exemplary embodiments of the present invention in more detail with reference to the accompanying drawings. Wherein, in the exemplary embodiments of the present invention, the same reference numerals generally represent the same components.

Fig. 1 shows a flowchart of a compensation control method for a permanent magnet synchronous motor according to an embodiment of the present invention.
Fig. 2 shows a block diagram of a compensation control system for a permanent magnet synchronous motor according to an embodiment of the present invention.
Fig. 3 shows a schematic diagram of an algorithm of a disturbance observer of the compensation control system for a permanent magnet synchronous motor according to an embodiment of the present invention.
Fig. 4 shows a schematic diagram of an algorithm of a repetitive controller of the permanent magnet synchronous motor compensation control system according to an embodiment of the present invention.
Fig. 5 shows a schematic diagram of the actual output current of the d-axis when no resistor is added according to the compensation control system for a permanent magnet synchronous motor of an embodiment of the present invention.
Fig. 6 shows a schematic diagram of the actual output current of the d-axis when a resistor is added according to the compensation control system for a permanent magnet synchronous motor of an embodiment of the present invention.
Fig. 7 shows a harmonic analysis diagram of the actual output current of the d-axis when the resistor is added according to the compensation control system for a permanent magnet synchronous motor of an embodiment of the present invention.
Fig. 8 shows a comparison diagram of the harmonic frequency of the actual output current of the d-axis and the double electric frequency of the motor when the resistor is added according to the compensation control system for a permanent magnet synchronous motor of an embodiment of the present invention.
Fig. 9 shows a schematic diagram of the actual output current of the d-axis with addition of the compensation algorithm in the compensation control system for a permanent magnet synchronous motor according to an embodiment of the present invention.
Fig. 10 shows a schematic diagram of the actual output current of the d-axis without addition of the compensation algorithm in the compensation control system for a permanent magnet synchronous motor according to an embodiment of the present invention.

Fig. 11 shows a schematic diagram of the actual output current of the d-axis after adding the compensation algorithm but without addition of the resistor of the compensation control system for a permanent magnet synchronous motor according to an embodiment of the present invention.

Fig. 12 shows a harmonic analysis diagram of the actual output current of the d-axis when three-phase unbalanced compensation is added in the compensation control system for a permanent magnet synchronous motor according to an embodiment of the present invention.

Reference numbers:

102. motor current acquisition module; 104. angular velocity acquisition module; 106. electrical angle acquisition module; 108. current coordinate transformation module; 110. PI control module; 112. disturbance compensation module; 114. repetitive control module; 116. final output voltage $V_e$ calculation module.

## DESCRIPTION OF THE EMBODIMENTS

Preferred embodiments of the present invention will be described in more detail below with reference to the accompanying drawings. Although preferred embodiments of the invention are shown in the drawings, it should be understood that the invention may be embodied in various forms and should not be limited to the embodiments set forth herein. Rather, these embodiments are provided so that this disclosure will be thorough and complete, and will fully convey the scope of the invention to those skilled in the art.

According to the present invention, a compensation control method for a permanent magnet synchronous motor, comprising: calculating a PI control output voltage $V_P$ of the permanent magnet synchronous motor; performing disturbance observation on the permanent magnet synchronous motor, and calculating a disturbance compensation voltage $V_L$ of the permanent magnet synchronous motor; calculating a repetitive control output voltage $V_R$; acquiring a final output voltage $V_e$ after compensation control in a current cycle based on the PI control output voltage $V_P$, the disturbance compensation voltage $V_L$ and the repetitive control output voltage $V_R$.

Specifically, the three-phase unbalanced disturbance is suppressed by the disturbance observation voltage, and the steady-state error of the output signal control is reduced by the repetitive control voltage and the PI control output voltage. When the three-phase impedance changes when the actual motor is running, the motor will not experience speed and torque pulsation, ensuring normal operation of the motor and effectively reducing the amplitude of second-order harmonics caused by three-phase imbalance.

As a preferred solution, acquiring the PI control output voltage $V_P$ by the following steps: collecting an angular velocity, an electrical angle and three-phase currents ia, ib, ic of the permanent magnet synchronous motor in real time; based on the electrical angle, converting the three-phase currents ia, ib, and ic from a three-phase coordinate system to an actual output current id of a d-axis of the motor and an actual output current iq of a q-axis of the motor under a d-q coordinate system; based on the angular velocity, acquiring a q-axis command current $i_q^*$ of the permanent magnet synchronous motor; based on the q-axis command current $i_q^*$ and the actual output current iq of the q-axis, acquiring a q-axis command voltage $U_q^p$ ; based on an initial value of a d-axis command current $i_d^*$ and the actual output current id of the d-axis, acquiring a d-axis command voltage $U_d^p$ ; wherein the PI control output voltage $V_p$ is:

$$V_P = \begin{pmatrix} U_d^P \\ U_q^P \end{pmatrix}$$ .

The signals of the angular velocity $\omega$ and the electrical angle $\theta$ of the permanent magnet synchronous motor are collected through angle and rotational speed sensors, the signals of three-phase currents ia, ib, and ic of the permanent magnet synchronous motor are collected through the current acquisition module, the three-phase currents ia, ib, and ic are converted from the three-phase coordinate system to the actual output current id of the d-axis and the actual output current iq of the q-axis of the motor under the d-q coordinate system through Clark and Park transformations; and the q-axis command current $i_q^*$ of the motor is obtained according to the angular velocity through the rotational speed PI closed-loop control. The rotational speed PI closed-loop control refers to using the deviation (difference) between the target rotational speed $\omega^*$ and the actual angular speed $\omega$ as input of the rotational speed PI controller I to obtain the motor's q-axis command current i* . Set the motor's d-axis command current $i_d^* = 0$ , and obtain the q-axis command voltage $U_q^p$ and d-axis command voltage $U_d^p$ through the PI current closed-loop control. The PI current closed-loop control refers to using the deviation between the q-axis command current $i_q^{*}$ and the actual current iq as input of the current PI controller II, the output of PI controller II is the d-axis command voltage $U_q^p$ ; using the deviation between the d-axis command current $i_d^{*}$ and the actual current id as the input current of current PI controller III, and the output of the current PI controller III is the d-axis command voltage $U_d^p$ , thus acquiring the voltage $V_P$ output by PI control,

$$V_P = \begin{pmatrix} U_d^P \\ U_q^P \end{pmatrix}.$$

As a preferred solution, the three-phase currents ia, ib, and ic are converted from the three-phase coordinate system to a motor α-axis output current iα and β-axis output current iβ under an α-β coordinate system through Clark coordinate transformation; the motor α-axis output current iα and β-axis output current iβ under the α-β coordinate system are converted to the actual output current id of the d-axis of the motor and the actual output current iq of the q-axis under the d-q coordinate system through Park coordinate transformation.

As a preferred solution, product $K_s$ of Clark coordinate transformation matrix $K_{s1}$ and Park coordinate transformation matrix $K_{s2}$ is:

$$K_s = \frac{2}{3} \begin{bmatrix} \cos\theta & \cos(\theta - \frac{2}{3}\pi) & \cos(\theta + \frac{2}{3}\pi) \\ \sin\theta & \sin(\theta - \frac{2}{3}\pi) & \sin(\theta + \frac{2}{3}\pi) \\ \frac{1}{2} & \frac{1}{2} & \frac{1}{2} \end{bmatrix}$$

$$K_s^{-1} = \begin{bmatrix} \cos\theta & \sin\theta & 1 \\ \cos(\theta - \frac{2}{3}\pi) & \sin(\theta - \frac{2}{3}\pi) & 1 \\ \cos(\theta + \frac{2}{3}\pi) & \sin(\theta + \frac{2}{3}\pi) & 1 \end{bmatrix}$$

$$K_{s1} = \frac{2}{3} \begin{bmatrix} 0 & -\frac{\sqrt{3}}{2} & \frac{\sqrt{3}}{2} \\ 1 & -\frac{1}{2} & -\frac{1}{2} \\ \frac{1}{2} & \frac{1}{2} & \frac{1}{2} \end{bmatrix}, \quad K_{s2} = \begin{bmatrix} -\sin\theta & \cos\theta & 0 \\ \cos\theta & \sin\theta & 0 \\ 0 & 0 & 1 \end{bmatrix}$$

wherein, , θ is the electrical angle of the motor, $K_s$ is the product of the Clark coordinate transformation matrix and the Park coordinate transformation matrix, and $K_s^{-1}$ is the inverse matrix of matrix $K_s$.

Specifically, first convert the current from the three-phase coordinate system to the $\alpha$ - $\beta$ coordinate system, and then from the $\alpha$ - $\beta$ coordinate system to the d-q coordinate system.

As a preferred solution, the disturbance compensation voltage $V_L$ of the permanent magnet synchronous motor is acquired by the following steps: calculating a disturbance observation reference voltage $\hat{V}_k$ of the permanent magnet synchronous motor; calculating the disturbance compensation voltage $V_L$ based on the disturbance observation reference voltage $\hat{V}_k$, wherein,

$$V_L = C_p\left(z\right)\left(V_e^{-1} - \hat{V}_k\right), \quad \hat{V}_k = \begin{pmatrix} \hat{U}_d \\ \hat{U}_q \end{pmatrix}$$

$$\hat{U}_d = R_s^* i_d + L_s^* \frac{di_d}{dt} - \omega_e L_s^* i_q$$

$$\hat{U}_q = R_s^* i_q + L_s^* \frac{di_q}{dt} + \omega_e L_s^* i_d + \omega_e \varphi_f$$

wherein, $C_p(z)$ is filter function of the disturbance observation, $V_e^{-1}$ is the final output voltage after compensation control in the previous cycle, $\hat{U}_d$, $\hat{U}_q$ are d-axis and q-axis reference voltages for disturbance observation, $R_s^*$ is a three-phase average estimated resistance of an equivalent permanent magnet synchronous motor, 4 is a three-phase average estimated inductance of the equivalent permanent magnet synchronous motor, $i_d$ and $i_q$ are actual output currents of the d-axis and q-axis, $\omega_e$ is the electrical angular velocity of the motor, $\omega_e = P^* \omega$, P is a number of pole pairs of the motor, $\omega$ is the angular velocity, and $\varphi_f$ is a flux linkage of a motor rotor.

Specifically, the disturbance observation reference voltage $\hat{V}_k = \begin{pmatrix} \hat{U}_d \\ \hat{U}_q \end{pmatrix}$ is calculated according to the formulas:

$$\begin{cases} \hat{U}_d = R_s^* i_d + L_s^* \dfrac{di_d}{dt} - \omega_e L_s^* i_q \\ \hat{U}_q = R_s^* i_q + L_s^* \dfrac{di_q}{dt} + \omega_e L_s^* i_d + \omega_e \varphi_f \end{cases}$$

The disturbance compensation voltage $V_L = \begin{pmatrix} U_d^L \\ U_q^L \end{pmatrix}$ is calculated by the disturbance calculation formula: $V_L = C_p(z)(V_e^{-1} - \hat{V}_k)$, which is used to compensate for disturbances caused by impedance imbalance between the permanent magnet synchronous motor and the transmission line; wherein $\hat{U}_d$, $\hat{U}_q$ are d-axis and q-axis reference voltages for disturbance observation, $R_s^*$ is a three-phase average estimated resistance of an equivalent permanent magnet synchronous motor, 4 is a three-phase average estimated inductance of the equivalent permanent magnet synchronous motor, $i_d$ and $i_q$ are actual output currents of the d-axis and q-axis, $\omega_e$ is the electrical angular velocity of the motor, $\omega_e = P^* \omega$, P is a number of pole pairs of the motor which is obtained by a motor data manual, $\varphi_f$ is a flux linkage of a motor rotor which is obtained by a motor data manual, $C_p(z)$ is filter function of the disturbance observation, which is a second-order bandpass filter, $V_e^{-1}$ is the final output d-q axis voltage $V_e$ of the three-phase impedance imbalance of the permanent magnet synchronous motor calculated by the compensation control method of the present invention at the previous moment (previous control cycle), and $\hat{V}_k$ is the disturbance observation reference voltage.

As a preferred solution, the repetitive control output voltage $V_R$ is calculated by the following formulas:

$$V_R = G_{RC}(z)e(z), \quad G_{RC}(z) = \frac{z^{-N}C(z)}{1-Q(z)z^{-N}}$$

wherein, $G_{RC}(z)$ is transfer function of the repetitive control, e(z) is difference between the command current $\begin{pmatrix} i_d^* \\ i_q^* \end{pmatrix}$ of

the d-axis and q-axis and actual output current $\begin{pmatrix} i_d \\ i_q \end{pmatrix}$ of the d-axis and q-axis, N is a ratio of a period of an error signal to a sampling interval, C(z) is compensation transfer function, $C(z) = K_r z^j S(z)$, j is a constant, $K_r$ is repetitive control gain, S(z) is a low-pass filter, Q(z) is a low-pass filter or a constant close to 1.

Specifically, the transfer function of the repetitive control $G_{RC}(z) = \frac{z^{-N}C(z)}{1-Q(z)z^{-N}}$, $V_R = G_{RC}(z)e(z)$ can be obtained by the repetitive control and PI control; wherein $G_{RC}(z)$ is the transfer function of the repetitive control, e(z) is difference between the command current $\begin{pmatrix} i_d^* \\ i_q^* \end{pmatrix}$ of the d-axis and q-axis and actual output current $\begin{pmatrix} i_d \\ i_q \end{pmatrix}$ of the d-axis and q-axis, C(z) is compensation transfer function, $C(z) = K_r z^j S(z)$, $K_r$ is repetitive control gain, S(z) is a low-pass filter, K is a constant for generating a advance stage, N is a ratio of a period of an error signal to a sampling interval, 2(z) is a low-pass filter or a constant close to 1, $V_R$ is the repetitive control output voltage $\begin{pmatrix} U_d^R \\ U_q^R \end{pmatrix}$, $U_d^R$ and $U_q^R$ are repetitive output voltage of d-axis and q-axis.

As a preferred solution, the final output voltage $V_e$ after compensation control in the current cycle is acquired by the following formula:

$$V_e = V_P + V_L + V_R.$$

Specifically, adding up the disturbance compensation voltage $V_L$, the PI control output voltage $V_P$, and the repetitive control output voltage $V_R$ to obtain the final output voltage $V_e$ of the compensation control method for the permanent magnet synchronous motor with unbalanced three-phase impedance of the present invention, $V_e = \begin{pmatrix} U_d^e \\ U_q^e \end{pmatrix}$, that is $V_e = V_P + V_L + V_R$.

The final output voltage $V_e$ is transformed into a three-phase voltage through Park inverse transformation, SVPWM modulation algorithm, and adjustment of a three-phase inverter, and the three-phase voltage is input to the motor.

The present invention also provides a compensation control system for a permanent magnet synchronous motor, comprising: a motor current acquisition module, the motor current acquisition module is configured to collect real-time three-phase currents ia, ib, ic of the permanent magnet synchronous motor; an angular velocity acquisition module, the angular velocity acquisition module is configured to collect real-time angular velocity of the permanent magnet synchronous motor; an electrical angle acquisition module, the electrical angle acquisition module is configured to collect real-time electrical angle of the permanent magnet synchronous motor; a current coordinate transformation module, the current coordinate transformation module is respectively connected with the motor current acquisition module and the electrical angle acquisition module, and is configured to convert currents under a three-phase coordinate system to actual output current id of a d-axis and actual output current iq of a q-axis of the motor under a d-q coordinate system; a PI control module, the PI control module is connected with the angular velocity acquisition module and the current coordinate transformation module, and is configured to perform PI control according to the real-time angular velocity, the actual output current id of the d-axis of the motor, and the actual output current iq of the q-axis, and output a PI control output voltage $V_P$ to a final output voltage $V_e$ calculation module; a disturbance compensation module, the disturbance compensation module is connected with the current coordinate transformation module and the final output voltage $V_e$ calculation module, and is configured to perform disturbance observation on the permanent magnet synchronous motor according to the actual output current id of the d-axis and the actual output current iq of the q-axis and output a disturbance compensation voltage $V_L$ to the final output voltage $V_e$ calculation module; a repetitive control module, the repetitive control module is connected with the PI control module, the current coordinate transformation module and the final output voltage $V_e$ calculation module, and is configured to perform repetitive control according to the actual output current id of the d-axis and the actual output current iq of the q-axis and output a repetitive control output voltage $V_R$ to the final output voltage $V_e$ calculation module; the final output voltage $V_e$ calculation module, the final output voltage $V_e$ calculation module is respectively connected with the PI control module, the disturbance compensation module and the repetitive control module, and is configured to acquire the final output voltage $V_e$ after compensation control in a current cycle.

For a motor model when three-phase imbalance occurs, the impedance on the transmission line is equivalent to the internal impedance of the motor to quantitatively analyze the impact of three-phase imbalance of the motor. The present invention analyzes the operation status of the motor under three-phase impedance imbalance by equating the three-phase equivalent permanent magnet synchronous motor model to the model of the motor and the transmission line three-phase. This can simplify the complex mathematical model of the motor under three-phase imbalance.

Converting from a three-phase coordinate system to a d-q coordinate system requires Clark and Park transformations, product of Clark transformation and Park transformation is:

$$K_s = \frac{2}{3}\begin{bmatrix} \cos\theta & \cos(\theta - \frac{2}{3}\pi) & \cos(\theta + \frac{2}{3}\pi) \\ \sin\theta & \sin(\theta - \frac{2}{3}\pi) & \sin(\theta + \frac{2}{3}\pi) \\ \frac{1}{2} & \frac{1}{2} & \frac{1}{2} \end{bmatrix}$$

$$K_s^{-1} = \begin{bmatrix} \cos\theta & \sin\theta & 1 \\ \cos(\theta - \frac{2}{3}\pi) & \sin(\theta - \frac{2}{3}\pi) & 1 \\ \cos(\theta + \frac{2}{3}\pi) & \sin(\theta + \frac{2}{3}\pi) & 1 \end{bmatrix}$$

$$K_{s1} = \frac{2}{3}\begin{bmatrix} 0 & -\frac{\sqrt{3}}{2} & \frac{\sqrt{3}}{2} \\ 1 & -\frac{1}{2} & -\frac{1}{2} \\ \frac{1}{2} & \frac{1}{2} & \frac{1}{2} \end{bmatrix}$$

wherein, the Clark transformation matrix is $K_{s1}$ above, the Park transformation matrix is

$$K_{s2} = \begin{bmatrix} -\sin\theta & \cos\theta & 0 \\ \cos\theta & \sin\theta & 0 \\ 0 & 0 & 1 \end{bmatrix}$$

, θ is the electrical angle of the motor, $K_s$ is the product of the Clark coordinate transformation matrix and the Park coordinate transformation matrix, and $K_s^{-1}$ is the inverse matrix of matrix $K_s$.

According to the three-phase transformation formulas, analyze the impact of resistance under imbalance: define

$$R = \begin{bmatrix} R_a & 0 & 0 \\ 0 & R_b & 0 \\ 0 & 0 & R_c \end{bmatrix}$$

R as the resistance matrix. wherein $R_a$, $R_b$, $R_c$ are resistances on three phases a, b, and c, including motor resistance and transmission line resistance, which can be measured by a multimeter.

According to voltage formulas:

$$v_q^r = R_s^* i_q + \frac{2}{3}\left[\frac{2R_a - R_b - R_c}{4}\cos(2\theta) + \frac{\sqrt{3}(R_c - R_b)}{4}\sin(2\theta)\right]i_q$$

$$+ \frac{2}{3}\left[(\frac{2R_a - R_b - R_c}{4}\sin(2\theta) - \frac{\sqrt{3}}{4}(R_c - R_b)\cos(2\theta)\right]i_d$$

$$v_d^r = R_s^* i_d + \frac{2}{3}[\frac{2R_a - R_b - R_c}{4}\sin(2\theta) - \frac{\sqrt{3}(R_c - R_b)}{4}\cos(2\theta)]i_q$$

$$- \frac{2}{3}[\frac{\sqrt{3}}{4}(R_c - R_b)\sin(2\theta) + \frac{2R_a - R_b - R_c}{4}\cos(2\theta)]i_d$$

$$V_{qd0} = \begin{bmatrix} v_q^r \\ v_d^r \\ 0 \end{bmatrix}$$

define a voltage matrix , wherein $v_d^r$ and $v_q^r$ are d-axis and q-axis voltages when only resistance is considered. Define

$$i_{qd0} = \begin{bmatrix} i_q^r \\ i_d^r \\ 0 \end{bmatrix}$$

, wherein $i_d^r$ and $i_q^r$ are d-axis and q-axis currents when only resistance is considered.

$R_s^*$ is $(R_a + R_b + R_c)/3$. Based on the same principle, the relationship between d-q voltages and inductance under three-phase imbalance can be analyzed, and the inductance matrix L can be defined:

$$L = \begin{bmatrix} L_a & 0 & 0 \\ 0 & L_b & 0 \\ 0 & 0 & L_c \end{bmatrix}$$

wherein $L_a$, $L_b$, $L_c$ are equivalent three-phases inductances, including motor inductance and transmission line inductance, which can be measured by a multimeter.

$$v_q^L = \omega_e \lambda_d + \frac{d\lambda_q}{dt}$$

$$v_d^L = -\omega_e \lambda_q + \frac{d\lambda_d}{dt}$$

$$\lambda_{qd0} = K_s L K_s^{-1} i_{qd0}$$

$$\lambda_{qd0} = \begin{bmatrix} \lambda_q \\ \lambda_d \\ 0 \end{bmatrix}$$

$\lambda_d$ and $\lambda_q$ are flux linkages of the motor, $\omega_e$ is the electrical angular velocity of the motor, , and

d-axis and q-axis voltages $v_d^L$ and $v_q^L$ which are only affected by the inductance can be obtained:

$$v_q^L = L_s^* \frac{di_q}{dt} + \omega_e L_s^* i_d + [\frac{2L_a - L_b - L_c}{6}\cos(2\theta) + \frac{\sqrt{3}(L_c - L_b)}{6}\sin(2\theta)](\frac{di_q}{dt} + \omega_e i_d) + [\frac{\sqrt{3}}{6}(L_c - L_b)\cos(2\theta) -$$

$$\frac{2L_a - L_b - L_c}{6}\sin(2\theta)](\omega_e i_q - \frac{di_d}{dt})$$

$$v_d^L = L_s^* \frac{di_d}{dt} - \omega_e L_s^* i_q + [\frac{2L_a - L_b - L_c}{6}\sin(2\theta) - \frac{\sqrt{3}(L_c - L_b)}{6}\cos(2\theta)](\frac{di_q}{dt} + \omega_e i_d) + [\frac{\sqrt{3}}{6}(L_c - L_b)\sin(2\theta) +$$

$$\frac{2L_a - L_b - L_c}{6}\cos(2\theta)](\omega_e i_q - \frac{di_d}{dt})$$

wherein $L_s^*$ is $(L_a + L_b + L_c)/3$. Considering that the permanent magnet in the motor also has magnetic flux in the q-axis, the final voltage can be written as:

$$v_q = v_q^r + v_q^L + \omega_e \varphi_f$$

$$v_d = v_d^r + v_d^L$$

wherein $v_d, v_q$ are the actual output voltages of d-axis and q-axis of the three-phase equivalent permanent magnet

$$G_p(z) = \begin{pmatrix} i_d / v_d \\ i_q / v_q \end{pmatrix}$$

synchronous motor model under unbalanced conditions, that is . $\varphi_f$ is the flux linkage of the rotor, which is obtained by the motor data manual. Considering $di_d / dt \ll \omega_e i_d$ and $di_q / d_t \ll \omega_e i_q$ when noises in d-axis and q-axis currents are filtered, and $i_d \ll i_q$ for the control mode of $i_d^* = 0$, the formulas can be further simplified. The simplified formulas are:

$$v_q = R_s^* i_q + L_s^* \frac{di_q}{dt} + \omega_e L_s^* i_d + \omega_e \varphi_f + [\frac{\sqrt{3}}{6}(L_c - L_b)\cos(2\theta) - \frac{2L_a - L_b - L_c}{6}\sin(2\theta)]\omega_e i_q$$

$$+ [\frac{\sqrt{3}}{6}(r_c - r_b)\sin(2\theta) + \frac{2r_a - r_b - r_c}{6}\cos(2\theta)]i_q$$

$$v_d = R_s^* i_d + L_s^* \frac{di_d}{dt} - \omega_e L_s^* i_q + [\frac{\sqrt{3}}{6}(L_c - L_b)\sin(2\theta) + \frac{2L_a - L_b - L_c}{6}\cos(2\theta)]\omega_e i_q$$

$$+ [\frac{2r_a - r_b - r_c}{6}\sin(2\theta) - \frac{\sqrt{3}}{6}(r_c - r_b)\cos(2\theta)]i_q$$

Therefore, during the rotation of the motor, when the three phases are not equal, second-order harmonics will occur. The magnitude of the second harmonic is directly related to the rotational speed and current of the motor. Therefore, it is necessary to effectively reduce the amplitude of second-order harmonics caused by three-phase imbalance through a method.

Specifically, based on the signals collected by the current acquisition module and the electrical angle acquisition module, the current is converted from the three-phase coordinate to the actual output current id of the d-axis and the actual output current iq of the q-axis in the d-q coordinate. Based on the signal from the angular velocity acquisition module and the actual output current id of the d-axis and the actual output current iq of the q-axis, the PI output voltage is obtained through the PI control module, the disturbance compensation voltage is obtained by the actual output current id of the d-axis and the actual output current iq of the q-axis through the disturbance compensation module. The difference in currents is used as input to the repetitive control module to obtain the repetitive control voltage. The final output voltage

$$V_e = \begin{pmatrix} U_d^e \\ U_q^e \end{pmatrix} \text{ is } V_e = V_P + V_L + V_R.$$

According to the exemplary embodiment, the compensation control system for permanent magnet synchronous motor suppresses disturbances caused by three-phase imbalance through the disturbance observation module, and reduces steady-state errors in output signal control through the repetitive control module and the PI control module. When the three-phase impedance changes during actual motor operation, the motor will not experience pulsations of rotational speed and torque, ensuring normal operation and system stability of the motor, and effectively reducing the amplitude of second-order harmonic waves caused by three-phase imbalance.

As a preferred solution, the PI control module comprising a first PI controller, a second PI controller and a third PI controller, difference between the angular velocity and a target angular velocity is used as an input of the first PI controller, and an output of the first PI controller is used as a q-axis command current i*; difference between the q-axis command current $i_q^*$ and the actual output current iq of the q-axis is used as an input of the second PI controller, and an output of the second PI controller is used as a q-axis command voltage $U_q^p$ ; difference between an initial value of the d-axis command current $i_q^*$ and the actual output current id of the d-axis is used as an input of the third PI controller, and an output of the third PI controller is used as a d-axis command voltage $U_d^p$ ; wherein the PI control output voltage

$$V_P = \begin{pmatrix} U_d^p \\ U_q^p \end{pmatrix}$$

$V_p$ is: .

Signals of the angular velocity $\omega$ and the electrical angle $\theta$ of the permanent magnet synchronous motor are collected through the angular velocity acquisition module and the electrical angle acquisition module. Signals of the three-phase currents ia, ib, and ic of the permanent magnet synchronous motor are collected through the current acquisition module. The three-phase currents ia, ib, and ic are converted from the three-phase coordinate system to the actual output current id of the d-axis and the actual output current iq of the q-axis under the d-q coordinate system through the current coordinate transformation module (Clark transform and Park transform). Take the deviation (difference) between the target rotational speed $\omega^*$ and the actual angular velocity $\omega$ as the input of the first PI controller, and use the output of the first PI controller as the motor's q-axis command current i*. Set the d-axis command current of the motor $i_d^* = 0$ , and obtain the q-axis command voltage $U_q^p$ and d-axis command voltage $U_d^p$ through PI current closed-loop control. The PI current closed-loop control refers to the deviation between the q-axis command current $i_q^*$ and the actual current iq is used as the input of the second PI controller, the output of the second PI controller is the d-axis command voltage $U_q^p$ , the deviation between the d-axis command current $i_d^* = 0$ and the actual current id is used as the input current of the third PI controller, and the output of the third PI controller is the d-axis command voltage $U_d^p$ ,

$$V_P, \quad V_P = \begin{pmatrix} U_d^P \\ U_q^P \end{pmatrix}$$

thus obtaining the PI control output voltage.

As a preferred solution, the disturbance compensation module comprises a disturbance observer and a bandpass filter, the repetitive control module comprises a repetitive controller. Use the actual output current id of the d-axis and the actual output current iq of the q-axis as an input of the disturbance observer, and use an output of the disturbance observer as the d-axis and q-axis reference voltages for disturbance observation. Use difference between the final output voltage after compensation control in the previous cycle and the d-axis and q-axis reference voltages for disturbance observation as an input of the bandpass filter, and use an output of the bandpass filter as the disturbance compensation voltage $V_L$. Use difference between the q-axis command current $i_q^{\cdot*}$ and the actual output current iq of the q-axis and difference between an initial value of the d-axis command current $i_d^{\cdot*}$ and the actual output current id of the d-axis as an input of the repetitive controller, and use an output of the repetitive controller as the repetitive control output voltage $V_R$. The final output voltage $V_e$ calculation module adds the PI control output voltage $V_P$, the disturbance compensation voltage $V_L$ and the repetitive control output voltage $V_R$, and uses a sum of the addition as the final output voltage $V_e$.

Specifically, the disturbance observer equates the three-phase equivalent permanent magnet synchronous motor model to a model combining the motor and transmission line. The three-phase equivalent permanent magnet synchronous motor model consists of three identical inductors and resistors connected in a star pattern, which is compared with the actual three-phase unbalanced motor and transmission line model to correct the errors caused by three-phase imbalance. Gp (z) is the transfer function of the control object, Gn (z) is the transfer function of the reference model of the system, and d($z$) is the interference value, $\xi$ ($z$) is the measurement noise, $C_p(z)$ is a second-order bandpass filter, which mainly reduces the interference of measurement noise on the system and reduces the error of the fundamental wave.

The disturbance observer module converts the voltage caused by three-phase imbalance in the motor system into a generalized unknown input disturbance of the motor system. The error signal generated by three-phase imbalance is obtained as a second-order component by a formula. Therefore, the bandwidth of the bandpass filter should include the error signal generated by three-phase imbalance, and the observed motor system disturbance should be compensated in real-time to the voltage output of the motor control section to compensate for the deviation of the motor system caused by disturbances and perturbations. The disturbance observation module is based on prior knowledge of the motor model and measurable input-output quantities, and it can correct the dynamic and static characteristics of the motor system without changing the overall stability of the motor system, and is widely used in engineering practice. The following is an introduction to its specific implementation.

The actual working model of the permanent magnet synchronous motor system (the model of dual closed-loop control system of the permanent magnet synchronous motor) can be expressed as:

$$\begin{cases} U_d^* = R_s^* i_d + L_s^* \dfrac{di_d}{dt} - \omega_e L_s^* i_q + \Delta U_d^b \\[4mm] U_q^* = R_s^* i_q + L_s^* \dfrac{di_q}{dt} + \omega_e L_s^* i_d + \omega_e \varphi_f + \Delta U_q^b \end{cases}$$

The reference model established by the disturbance observation module (the ideal model of the permanent magnet synchronous motor) can be expressed as:

$$\begin{cases} \overset{\wedge}{U}_d = R_s^* i_d + L_s^* \dfrac{di_d}{dt} - \omega_e L_s^* i_q \\[4mm] \overset{\wedge}{U}_q = R_s^* i_q + L_s^* \dfrac{di_q}{dt} + \omega_e L_s^* i_d + \omega_e \varphi_f \end{cases}$$

wherein $U_d^*$、$U_q^*$ are actual input voltages, $\begin{pmatrix} U_d^* \\ U_q^* \end{pmatrix} = V_e^{-1}$, $V_e^{-1}$ is the output d-q axis voltage $V_e$ at the previous moment (previous control cycle) calculated by the compensation control method, $\hat{U}_d$ and $\hat{U}_q$ are d-axis and q-axis reference voltages for disturbance observation, $i_d$ and $i_q$ are output currents of the d-axis and q-axis of the motor, $\omega_e$ is the electrical angular velocity of the motor, $\varphi_f$ is a flux linkage of a motor rotor which is obtained by a motor data manual,

$R_s^*$ is a three-phase average estimated resistance of the equivalent permanent magnet synchronous motor, $L_s^*$ is a three-phase average estimated inductance of the equivalent permanent magnet synchronous motor,

$R_s^* = \dfrac{R_a + R_b + R_c}{3}$, $L_s^* = \dfrac{L_a + L_b + L_c}{3}$ , wherein $R_a$, $R_b$ and $R_c$ are sums of the three-phase resistances of the motor and transmission line, $L_a$, $L_b$ and $L_c$ are sums of three-phase inductances of the motor and transmission line, and

$\Delta U_d^b$ and $\Delta U_q^b$ are the error voltages of the d-axis and the q-axis generated by the coordinate transformation when the three-phase impedance is unbalanced. When considering the unbalanced transmission line impedance, $R_s^*$ and $L_s^*$ change at any time, so the designed theoretical values can be chosen at this time. Due to the errors of $R_s^*$ and $L_s^*$ in the actual reference model, $C_p(z)$ of the disturbance observation module is a bandpass filter, and the center frequency is twice of the electrical frequency, wherein the electrical frequency $f$ is $2\pi/\omega_e$, which can eliminate the fundamental wave error. In order to reduce the delay effect caused by the bandpass filter, the right cut-off frequency is 20 to 40 times of the center frequency and the left cut-off frequency is 1/2 to 1/3 of the center frequency to obtain an error voltage generated by three-phase imbalance to achieve the effect of compensation. The unknown error voltage can be estimated by establishing a disturbance observer:

$$\begin{cases} U_d^L = R_s^* i_d + L_s^* \dfrac{di_d}{dt} - \omega_e L_s^* i_q + C_p(z)\left( U_d^{e-1} - \hat{U}_d \right) \\ U_q^L = R_s^* i_q + L_s^* \dfrac{di_q}{dt} + \omega_e L_s^* i_d + \omega_e \varphi_f + C_p(z)\left( U_q^{e-1} - \hat{U}_q \right) \end{cases}$$

wherein, $\hat{U}_d$ and $\hat{U}_q$ are d-axis and q-axis reference voltages for disturbance observation, $U_d^{e-1}$ and $U_q^{e-1}$ are actual output voltages $U_d^e$ and $U_q^e$ of the motor at the previous moment (previous control cycle) obtained by the compensation control method. By adjusting the center frequency of the bandpass filter $C_p(z)$ to twice of the electrical frequency of the motor, the error voltage generated by three-phase impedance imbalance can be obtained, thereby compensating the system.

The repetitive control can stabilize the steady-state error in controlling the periodic signal. Based on the inner membrane theory, when the system has no error, the repetitive controller can provide the signal of the previous cycle so that the system has no static error. Among them, P(z) is the transfer function of the controlled object, which is the model of the permanent magnet synchronous motor.

$$\begin{bmatrix} \dot{i}_{dm} \\ \dot{i}_{qm} \end{bmatrix} = \begin{bmatrix} -\dfrac{R_{sm}}{L_{dm}} & \dfrac{L_{qm}}{L_{dm}}\omega_m \\ -\dfrac{L_{dm}}{L_{qm}}\omega_m & \dfrac{R_{sm}}{L_{qm}} \end{bmatrix} \begin{bmatrix} i_{dm} \\ i_{qm} \end{bmatrix} + \begin{bmatrix} \dfrac{1}{L_{dm}} & 0 \\ 0 & \dfrac{1}{L_{qm}} \end{bmatrix} \begin{bmatrix} u_{dm} \\ u_{qm} \end{bmatrix} + \begin{bmatrix} 0 \\ 1 \end{bmatrix} \dfrac{\omega_m \phi_{fm}}{L_{qm}}$$

$$Y = \begin{bmatrix} 1 & 0 \\ 0 & 1 \end{bmatrix} \begin{bmatrix} i_{dm} \\ i_{qm} \end{bmatrix}$$

$$P(z) = Y / \begin{bmatrix} u_{dm} \\ u_{qm} \end{bmatrix}$$

wherein $i_{dm}$, $i_{qm}$ are output currents of d-axis and q-axis of the permanent magnet synchronous motor model, $u_{dm}$, $u_{qm}$ are output voltages of d-axis and q-axis of the permanent magnet synchronous motor model, $R_{sm}$ is inner resistance of the permanent magnet synchronous motor model which is given by a motor data manual, $L_{dm}$, $L_{qm}$ are inductances of d-axis and q-axis of the permanent magnet synchronous motor model which are given by a motor data manual, $\omega_m$ is angular velocity of the permanent magnet synchronous motor model which is determined by the range of the angular velocity specified in a motor data manual, and $\phi_{fm}$ is flux linkage of the permanent magnet synchronous motor model which is given by a motor data manual.

$$R(z) = \begin{pmatrix} \dot{i}_d^* \\ \dot{i}_q^* \end{pmatrix}$$

e(z) is the error signal, $\begin{pmatrix} \dot{i}_d^* \\ \dot{i}_q^* \end{pmatrix}$ is the input signal, Q(z) is the auxiliary compensator, C(z) is the compensator, Q(z) is usually a low-pass filter or a constant less than 1, usually 0.95 in engineering, the present invention takes 0.95, and its function is to improve the stability of the system. The transfer function between the error signal and

$$\frac{e(z)}{R(z)} = \frac{z^N - Q(z)}{z^N - (Q(z) - C(z)P(z))}$$

the input signal is . According to the stability condition of the Lyapunov criterion, it is known that the stability of the system needs to ensure that all eigenvalues are located in the unit circle, so the stability condition is $|Q(z)-C(z)P(z)| < 1$. Set $z = e^{jv}$ $v \in [0, \pi]$, for any v, as long as the stability condition is met, the system is stable. The choice of N is the ratio of the period of the disturbance in the signal to the control period. Due to the error of the second-order component generated by the three-phase imbalance, the frequency of the disturbance in the signal is twice the electrical frequency, the control period is the control period selected by the controller, and the choice here is 100us. C(z) mainly compensates for the delay of the system due to the introduction of Q(z), which needs to add the advance link. In addition, the existence of C(z) reduces the amplitude of C(z)P(z), so amplitude of C(z) needs to compensated for. C(z) can be written as follows: $C(z) = K_r Z^k S(z)$. $K_r$ is gain for repetitive control used for amplitude compensation, larger $K_r$ can speed up the stabilization, but too large $K_r$ will cause the system to be unstable, and $K_r$ needs to be adjusted repeatedly to be 1/2 of the limit value of $K_r$ when the stability of the system is ensured. k is a constant to provide an advance link, its value is related to the delay generated by the bandwidth of the low-pass filter and the control cycle, and the value is the cut-off frequency of S(z)/control cycle 100us. S(z) is a low-pass filter, and the cut-off frequency of S(z) can be adjusted continuously, so that the existence of the low-pass filter can make the controlled object have greater attenuation in the high-frequency region, thus making the system more stable. The cut-off frequency can be 5 to 10 times of the double electrical frequency.

Embodiment 1

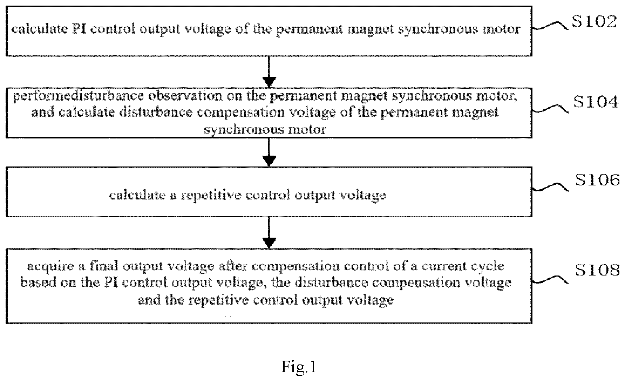

Fig. 1 shows a flowchart of a compensation control method for a permanent magnet synchronous motor according to an embodiment of the present invention.
As shown in Fig.1, a compensation control method for a permanent magnet synchronous motor, comprising: S102: calculating a PI control output voltage $V_P$ of the permanent magnet synchronous motor.
The PI control output voltage $V_P$ is acquired by the following steps: collecting an angular velocity, an electrical angle and three-phase currents ia, ib, ic of the permanent magnet synchronous motor in real time; based on the electrical angle, converting the three-phase currents ia, ib, and ic from a three-phase coordinate system to an actual output current id of a d-axis of the motor and an actual output current iq of a q-axis of the motor under a d-q coordinate system; based on the angular velocity, acquiring a q-axis command current $\dot{i}_q^*$ of the permanent magnet synchronous motor; based on the q-axis command current $\overset{\cdot *}{\text{i}}_q$ and the actual output current iq of the q-axis, acquiring a q-axis command voltage $U_q^p$ ; based on an initial value of a d-axis command current $\overset{\cdot *}{\text{i}}_d$ and the actual output current id of the d-axis, acquiring a d-axis command voltage $U_d^p$ ; wherein the PI control output voltage $V_p$ is: $\quad V_P = \begin{pmatrix} U_d^P \\ U_q^P \end{pmatrix}$ .

The three-phase currents ia, ib, and ic are converted from the three-phase coordinate system to a motor $\alpha$-axis output current i$\alpha$ and $\beta$-axis output current i$\beta$ under an $\alpha$-$\beta$ coordinate system through Clark coordinate transformation; the motor $\alpha$-axis output current i$\alpha$ and $\beta$-axis output current i$\beta$ under the $\alpha$-$\beta$ coordinate system are converted to the actual output current id of the d-axis of the motor and the actual output current iq of the q-axis of the motor under the d-q coordinate system through Park coordinate transformation.

As a preferred solution, product $K_s$ of Clark coordinate transformation matrix $K_{s1}$ and Park coordinate transformation matrix $K_{s2}$ is:

$$K_s = \frac{2}{3} \begin{bmatrix} \cos\theta & \cos(\theta - \frac{2}{3}\pi) & \cos(\theta + \frac{2}{3}\pi) \\ \sin\theta & \sin(\theta - \frac{2}{3}\pi) & \sin(\theta + \frac{2}{3}\pi) \\ \frac{1}{2} & \frac{1}{2} & \frac{1}{2} \end{bmatrix}$$

$$K_s^{-1} = \begin{bmatrix} \cos\theta & \sin\theta & 1 \\ \cos(\theta - \frac{2}{3}\pi) & \sin(\theta - \frac{2}{3}\pi) & 1 \\ \cos(\theta + \frac{2}{3}\pi) & \sin(\theta + \frac{2}{3}\pi) & 1 \end{bmatrix}$$

$$K_{s1} = \frac{2}{3} \begin{bmatrix} 0 & -\frac{\sqrt{3}}{2} & \frac{\sqrt{3}}{2} \\ 1 & -\frac{1}{2} & -\frac{1}{2} \\ \frac{1}{2} & \frac{1}{2} & \frac{1}{2} \end{bmatrix}, \quad K_{s2} = \begin{bmatrix} -\sin\theta & \cos\theta & 0 \\ \cos\theta & \sin\theta & 0 \\ 0 & 0 & 1 \end{bmatrix}$$

wherein, , $K_s$ is the product of the Clark coordinate transformation matrix and the Park coordinate transformation matrix, and $\theta$ is the electrical angle.

S104: performing disturbance observation on the permanent magnet synchronous motor, and calculating a disturbance compensation voltage $V_L$ of the permanent magnet synchronous motor.

The disturbance compensation voltage $V_L$ of the permanent magnet synchronous motor is acquired by the following steps: calculating a disturbance observation reference voltage $\hat{V}_k$ of the permanent magnet synchronous motor; calculating the disturbance compensation voltage $V_L$ based on the disturbance observation reference voltage $\hat{V}_k$, wherein,

$$V_L = C_p(z)\left(V_e^{-1} - \hat{V}_k\right), \quad \hat{V}_k = \begin{pmatrix} \hat{U}_d \\ \hat{U}_q \end{pmatrix}$$

$$\hat{U}_d = R_s^* i_d + L_s^* \frac{di_d}{dt} - \omega_e L_s^* i_q \, , \quad \hat{U}_q = R_s^* i_q + L_s^* \frac{di_q}{dt} + \omega_e L_s^* i_d + \omega_e \varphi_f$$

wherein, $C_p(z)$ is filter function of the disturbance observation, $V_e^{-1}$ is the final output voltage after compensation control in the previous cycle, $\hat{U}_d$, $\hat{U}_q$ are d-axis and q-axis reference voltages for disturbance observation, $R_s^*$ is a three-phase average estimated resistance of an equivalent permanent magnet synchronous motor, 4 is a three-phase average estimated inductance of the equivalent permanent magnet synchronous motor, $i_d$ and $i_q$ are actual output currents of the d-axis and q-axis, $\omega_e$ is the electrical angular velocity of the motor, $\omega_e = P^* \omega$, P is a number of pole pairs of the motor, $\omega$ is the angular velocity, and $\varphi_f$ is a flux linkage of a motor rotor.

S106: calculating a repetitive control output voltage $V_R$.

The repetitive control output voltage $V_R$ is calculated by the following formulas:

$$V_R = G_{RC}(z) e(z) \, , \quad G_{RC}(z) = \frac{z^{-N} C(z)}{1 - Q(z) z^{-N}}$$

wherein, $G_{RC}(z)$ is transfer function of repetitive control, $e(z)$ is difference between the command current $\begin{pmatrix} i_d^{\cdot *} \\ i_q^{\cdot *} \end{pmatrix}$ of the d-axis and q-axis and actual output current $\begin{pmatrix} i_d \\ i_q \end{pmatrix}$ of the d-axis and q-axis, N is a ratio of a period of an error signal to a sampling interval, $C(z)$ is compensation transfer function, $C(z) = K_r z^j S(z)$, j is a constant, $K_r$ is repetitive control gain, $S(z)$ is a low-pass filter, $Q(z)$ is a low-pass filter or a constant close to 1.

S108: acquiring a final output voltage $V_e$ after compensation control in a current cycle based on the PI control output voltage $V_P$, the disturbance compensation voltage $V_L$ and the repetitive control output voltage $V_R$.

The final output voltage $V_e$ after compensation control in the current cycle is acquired by the following formula:

$$V_e = V_P + V_L + V_R .$$

Embodiment 2

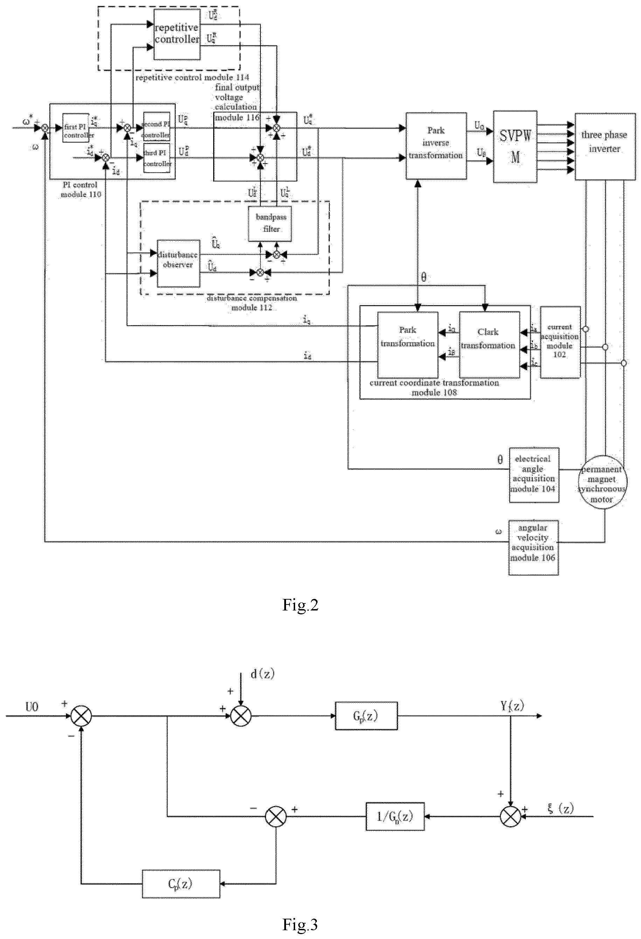

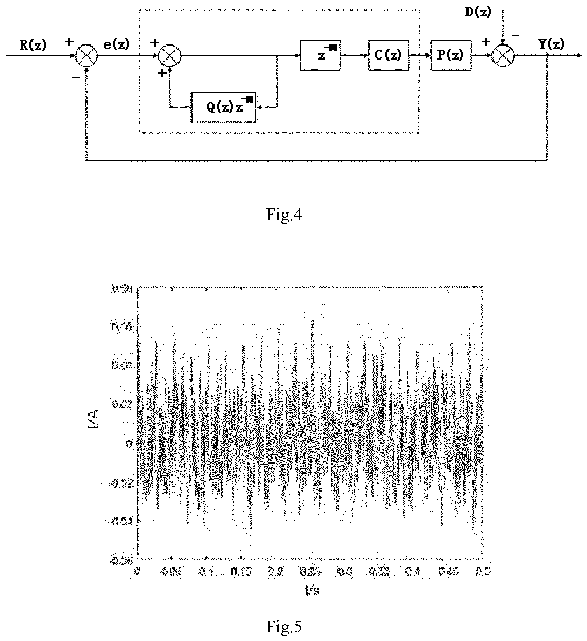

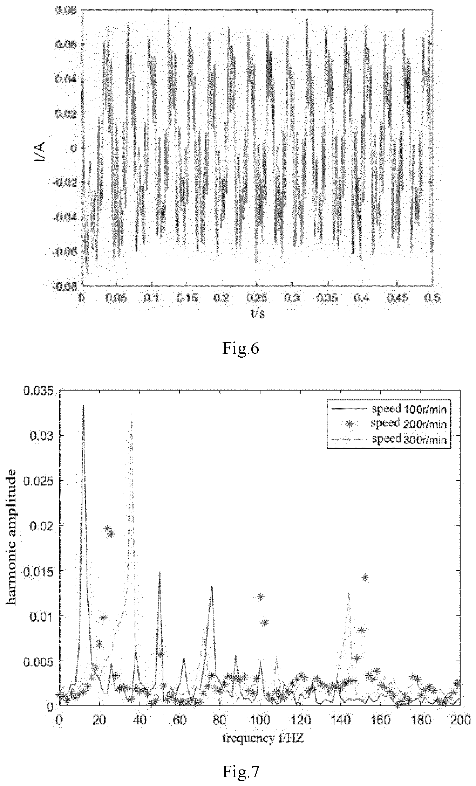

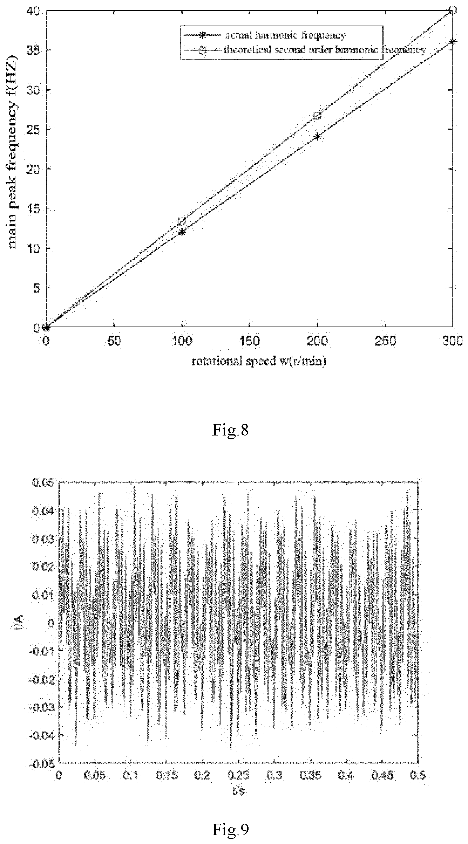

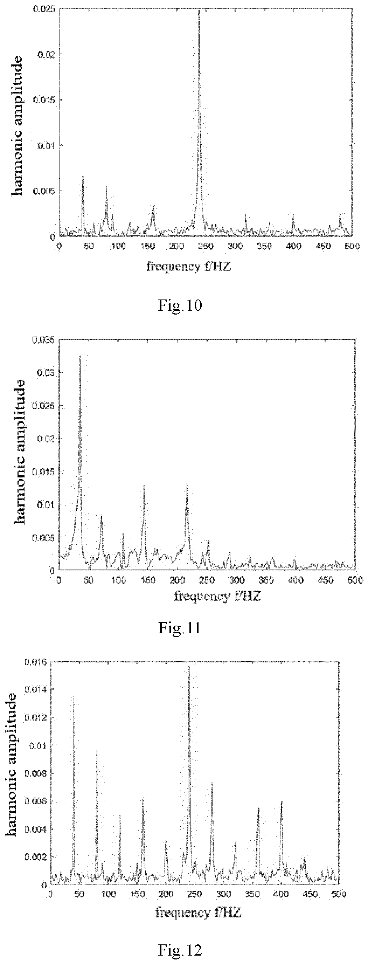

Fig. 2 shows a block diagram of a compensation control system for a permanent magnet synchronous motor according to an embodiment of the present invention. Fig. 3 shows a schematic diagram of an algorithm of a disturbance observer of the compensation control system for a permanent magnet synchronous motor according to an embodiment of the present invention. Fig. 4 shows a schematic diagram of an algorithm of a repetitive controller of the permanent magnet synchronous motor compensation control system according to an embodiment of the present invention. Fig. 5 shows a schematic diagram of the actual output current of the d-axis when no resistor is added according to the compensation control system for a permanent magnet synchronous motor of an embodiment of the present invention. Fig. 6 shows a schematic diagram of the actual output current of the d-axis when a resistor is added according to the compensation control system for a permanent magnet synchronous motor of an embodiment of the present invention. Fig. 7 shows a harmonic analysis diagram of the actual output current of the d-axis when the resistor is added according to the compensation control system for a permanent magnet synchronous motor of an embodiment of the present invention. Fig. 8 shows a comparison diagram of the harmonic frequency of the actual output current of the d-axis and the double electric frequency of the motor when the resistor is added according to the compensation control system for a permanent magnet synchronous motor of an embodiment of the present invention. Fig. 9 shows a schematic diagram of the actual output current of the d-axis with addition of the compensation algorithm in the compensation control system for a permanent magnet synchronous motor according to an embodiment of the present invention. Fig. 10 shows a schematic diagram of the actual output current of the d-axis without addition of the compensation algorithm in the compensation control system for a permanent magnet synchronous motor according to an embodiment of the present invention. Fig. 11 shows a schematic diagram of the actual output current of the d-axis with addition of the compensation algorithm but without addition of the resistor of the compensation control system for a permanent magnet synchronous motor according to an embodiment of the present invention. Fig. 12 shows a harmonic analysis diagram of the actual output current of the d-axis when three-phase unbalanced compensation is added in the compensation control system for a permanent magnet synchronous motor according to an embodiment of the present invention.

As shown in Fig. 2, Fig. 3, Fig. 4, Fig. 5, Fig. 6, Fig. 7, Fig.8, Fig. 9, Fig. 10, Fig. 11 and Fig. 12, a compensation control system for a permanent magnet synchronous motor, comprising:

a motor current acquisition module 102, the motor current acquisition module 102 is configured to collect real-time three-phase currents ia, ib, ic of the permanent magnet synchronous motor;

an angular velocity acquisition module 104, the angular velocity acquisition module 104 is configured to collect real-time angular velocity of the permanent magnet synchronous motor;

an electrical angle acquisition module 106, the electrical angle acquisition module 106 is configured to collect real-time electrical angle of the permanent magnet synchronous motor;

a current coordinate transformation module 108, the current coordinate transformation module 108 is respectively connected with the motor current acquisition module 102 and the electrical angle acquisition module 106, and is configured to convert currents under a three-phase coordinate system to actual output current id of a d-axis and actual output current iq of a q-axis of the motor under a d-q coordinate system;

a PI control module 110, the PI control module 110 is connected with the angular velocity acquisition module 104 and the current coordinate transformation module 108, and is configured to perform PI control according to the real-time angular velocity, the actual output current id of the d-axis of the motor, and the actual output current iq of the q-axis, and output a PI control output voltage $V_P$ to a final output voltage $V_e$ calculation module 116;

a disturbance compensation module 112, the disturbance compensation module 112 is connected with the current coordinate transformation module 106 and the final output voltage $V_e$ calculation module 116, and is configured to perform disturbance observation on the permanent magnet synchronous motor according to the actual output current id of the d-axis and the actual output current iq of the q-axis and output a disturbance compensation voltage $V_L$ to the final output voltage $V_e$ calculation module 116;

a repetitive control module 114, the repetitive control module 114 is connected with the PI control module 110, the current coordinate transformation module 108 and the final output voltage $V_e$ calculation module 116, and is configured to perform repetitive control according to the actual output current id of the d-axis and the actual output current iq of the q-axis and output a repetitive control output voltage $V_R$ to the final output voltage $V_e$ calculation module 116;

the final output voltage $V_e$ calculation module 116, the final output voltage $V_e$ calculation module 116 is respectively connected with the PI control module 110, the disturbance compensation module 112 and the repetitive control module 114, and is configured to acquire the final output voltage $V_e$ after compensation control in a current cycle.

The PI control module 110 comprises a first PI controller, a second PI controller and a third PI controller. Difference between the angular velocity and a target angular velocity is used as an input of the first PI controller, and an output of the first PI controller is used as a q-axis command current $\overset{*}{i_q}$ ; difference between the q-axis command current $\overset{*}{i_q}$ and the actual output current iq of the q-axis is used as an input of the second PI controller, and an output of the second PI controller is used as a q-axis command voltage $U_q^p$ ; difference between an initial value of the d-axis command current $\overset{*}{i_q}$ and the actual output current id of the d-axis is used as an input of the third PI controller, and an output of the third PI controller is used as a d-axis command voltage $U_d^p$ ; wherein the PI control output voltage $V_p$ is:

$$V_P = \begin{pmatrix} U_d^P \\ U_q^P \end{pmatrix}.$$

The disturbance compensation module 112 comprises a disturbance observer and a bandpass filter, the repetitive control module 114 comprises a repetitive controller; wherein using the actual output current id of the d-axis and the actual output current iq of the q-axis as an input of the disturbance observer, and using an output of the disturbance observer as the d-axis and q-axis reference voltages for disturbance observation; using difference between the final output voltage after compensation control in the previous cycle and the d-axis and q-axis reference voltages for disturbance observation as an input of the bandpass filter, and using an output of the bandpass filter as the disturbance compensation voltage $V_L$; using difference between the q-axis command current $i_q^*$ and the actual output current iq of the q-axis and difference between an initial value of the d-axis command current $i_d^*$ and the actual output current id of the d-axis as an input of the repetitive controller, and using an output of the repetitive controller as the repetitive control output voltage $V_R$.

The final output voltage $V_e$ calculation module 116 adds the PI control output voltage $V_P$, the disturbance compensation voltage $V_L$ and the repetitive control output voltage $V_R$, and uses a sum of the addition as the final output voltage $V_e$.

The harmonics of the current output by the permanent magnet synchronous motor is analyzed. Because the unbalanced impedance will generate a second-order voltage component, by comparing the second-order harmonics without unbalanced transmission line, the second-order harmonics with addition of unbalanced transmission line, and the second-order harmonics with the use of compensation, the compensation algorithm is verified.

In the experiment, a resistor is connected in series with a certain phase to simulate this working condition. The parameters of the permanent magnet synchronous motor used in the experiment are as follows: $R_s^*$ is the average value of the three-phase resistance of the equivalent permanent magnet synchronous motor, $L_s^*$ is the average value of the three-phase inductance of the equivalent permanent magnet synchronous motor, and P is the number of pole pairs obtained from the motor data manual. Measurement of $R_s^*$ and $L_s^*$ do not have to be precise, the electrical angle is collected by a photoelectric encoder to collect the mechanical angle and then multiplied by the number of pole pairs. A bandpass filter in the disturbance observer removes fundamental errors.

| $R_s^*$ | $L_s^*$ | $P$ |
| --- | --- | --- |
| 1 Ω | 5mH | 4 |

Start the permanent magnet synchronous motor with no load, connect a 5Ω resistor in series with phase A to realize the unbalanced impedance of the three phases of the motor, and set the target speed to 300r/min in the closed-loop of the speed. The experimental image of the actual output current of the d-axis when no resistor is added is shown in Fig.5, and the experimental image of the actual output current of the d-axis with the addition of the resistor is shown in Fig. 6. When phase A is connected in series with a 5Ω resistor, the harmonic analysis of the d-axis current at different speeds is shown in Fig.7, and the main harmonic frequencies in the experiment are compared with the double electrical frequency of the motor, as shown in Fig. 8. The d-axis current after the compensation algorithm is added is shown in Fig. 9, the harmonic analysis of the d-axis current without the compensation algorithm is shown in Fig. 10, the harmonic analysis of the uncompensated d-axis current when the phase A is connected in series with a 5Ω resistor is shown in Fig. 11, and the harmonic analysis of the d-axis current when three-phase unbalanced compensation is added is shown in Fig. 12.

From the harmonic analysis of the experimental results, it can be seen that when the unbalanced working condition is added, the current produces fluctuations in the second-order component. After adding the compensation algorithm, the harmonics caused by the three-phase unbalance are reduced, and compared with the uncompensated d-axis current harmonics, harmonics of other orders do not increase, which proves that the method of the present invention can reduce the current fluctuation caused by the unbalanced three-phase motor impedance. It can be seen from the figures that when the three-phase impedance imbalance is not added, the harmonic amplitude is 0.007 when the electric frequency is 40HZ, the 40HZ harmonic amplitude is 0.032 when the three-phase unbalance is added, and the 40HZ harmonic amplitude is 0.014 after three-phase unbalance compensation. It can be seen that through compensation, the increase of harmonics is 28% of that of the uncompensated. It can be seen that the compensation algorithm (compensation control method) effectively reduces the amplitude of second-order harmonics caused by three-phase imbalance.

While embodiments of the present invention have been described above, the foregoing description is exemplary, not exhaustive, and is not limited to the disclosed embodiments. Many modifications and alterations will be apparent to those of ordinary skill in the art without departing from the scope and spirit of the described embodiments.

**Claims**

1. A compensation control method for a permanent magnet synchronous motor, **characterized in that** it comprises:

   calculating a PI control output voltage $V_P$ of the permanent magnet synchronous motor;
   performing disturbance observation on the permanent magnet synchronous motor, and calculating a disturbance compensation voltage $V_L$ of the permanent magnet synchronous motor;
   calculating a repetitive control output voltage $V_R$;
   acquiring a final output voltage $V_e$ after compensation control in a current cycle based on the PI control output voltage $V_P$, the disturbance compensation voltage $V_L$ and the repetitive control output voltage $V_R$.

2. The compensation control method for a permanent magnet synchronous motor according to claim 1, **characterized in that** acquiring the PI control output voltage $V_P$ includes the following steps:

   collecting an angular velocity, an electrical angle and three-phase currents ia, ib, ic of the permanent magnet synchronous motor in real time;
   based on the electrical angle, converting the three-phase currents ia, ib, and ic from a three-phase coordinate system to a d-axis actual output current id and a q-axis actual output current iq for the motor under a d-q coordinate system;

   based on the angular velocity, acquiring a q-axis command current $i_q^*$ of the permanent magnet synchronous motor;

   based on the q-axis command current $i_q^*$ and the q-axis actual output current iq, acquiring a q-axis command voltage $U_q^p$;

   based on an initial value of a d-axis command current $i_d^*$ and the d-axis actual output current id, acquiring a d-axis command voltage $U_d^p$;

   $$V_P = \begin{pmatrix} U_d^P \\ U_q^P \end{pmatrix}$$
   wherein the PI control output voltage $V_p$ is: .

3. The compensation control method for a permanent magnet synchronous motor according to claim 2, **characterized in that** the three-phase currents ia, ib, and ic are converted from the three-phase coordinate system to $\alpha$-axis output current i$\alpha$ and $\beta$-axis output current i$\beta$ for the motor under an $\alpha$-$\beta$ coordinate system through Clark coordinate transformation;
   the $\alpha$-axis output current i$\alpha$ and the $\beta$-axis output current i$\beta$ for the motor under the $\alpha$-$\beta$ coordinate system are converted to the d-axis actual output current id and the q-axis actual output current iq for the motor under the d-q coordinate system through Park coordinate transformation.

4. The compensation control method for a permanent magnet synchronous motor according to claim 3, **characterized in that** product $K_s$ of Clark coordinate transformation matrix $K_{s1}$ and Park coordinate transformation matrix $K_{s2}$ is:

$$K_s = \frac{2}{3} \begin{bmatrix} \cos\theta & \cos(\theta - \frac{2}{3}\pi) & \cos(\theta + \frac{2}{3}\pi) \\ \sin\theta & \sin(\theta - \frac{2}{3}\pi) & \sin(\theta + \frac{2}{3}\pi) \\ \frac{1}{2} & \frac{1}{2} & \frac{1}{2} \end{bmatrix}$$

$$K_{s1} = \frac{2}{3}\begin{bmatrix} 0 & -\dfrac{\sqrt{3}}{2} & \dfrac{\sqrt{3}}{2} \\ 1 & -\dfrac{1}{2} & -\dfrac{1}{2} \\ \dfrac{1}{2} & \dfrac{1}{2} & \dfrac{1}{2} \end{bmatrix}, \quad K_{s2} = \begin{bmatrix} -\sin\theta & \cos\theta & 0 \\ \cos\theta & \sin\theta & 0 \\ 0 & 0 & 1 \end{bmatrix},$$

wherein,

$K_s$ is the product of the Clark coordinate transformation matrix and the Park coordinate transformation matrix, and $\theta$ is the electrical angle.

5. The compensation control method for a permanent magnet synchronous motor according to claim 2, **characterized in that** the disturbance compensation voltage $V_L$ of the permanent magnet synchronous motor is acquired by the following steps:

   calculating a disturbance observation reference voltage $\hat{V}_k$ of the permanent magnet synchronous motor;
   calculating the disturbance compensation voltage $V_L$ based on the disturbance observation reference voltage $\hat{V}_k$, wherein,

$$V_L = C_p(z)\left(V_e^{-1} - \hat{V}_k\right)$$

$$\hat{V}_k = \begin{pmatrix} \hat{U}_d \\ \hat{U}_q \end{pmatrix}$$

$$\hat{U}_d = R_s^* i_d + L_s^* \frac{di_d}{dt} - \omega_e L_s^* i_q$$

$$\hat{U}_q = R_s^* i_q + L_s^* \frac{di_q}{dt} + \omega_e L_s^* i_d + \omega_e \varphi_f$$

wherein, $C_p(z)$ is filter function of the disturbance observation, $V_e^{-1}$ is the final output voltage after compensation control in the previous cycle, $\hat{U}_d$, $\hat{U}_q$ are d-axis and q-axis reference voltages for disturbance observation, $R_s^*$ is a three-phase average estimated resistance of an equivalent permanent magnet synchronous motor, $L_s^*$ is a three-phase average estimated inductance of the equivalent permanent magnet synchronous motor, $i_d$ and $i_q$ are the d-axis actual output current and the q-axis actual output current, $\omega_e$ is the electrical angular velocity of the motor, $\omega_e = P^*\omega$, P is a number of pole pairs of the motor, $\omega$ is the angular velocity, and $\varphi_f$ is a flux linkage of a motor rotor.

6. The compensation control method for a permanent magnet synchronous motor according to claim 2, **characterized in that** the repetitive control output voltage $V_R$ is calculated by the following formulas:

$$V_R = G_{RC}(z)e(z)$$

$$G_{RC}(z) = \frac{z^{-N}C(z)}{1 - Q(z)z^{-N}}$$

wherein, $G_{RC}(z)$ is transfer function of repetitive control, e(z) is a difference between the command current $\begin{pmatrix} i_d^* \\ i_q^* \end{pmatrix}$ of the d-axis and q-axis and actual output current $\begin{pmatrix} i_d \\ i_q \end{pmatrix}$ of the d-axis and q-axis, N is a ratio of a period of an error signal to a sampling interval, C(z) is compensation transfer function, $C(z) = K_r z^j S(z)$, j is a constant, $K_r$ is repetitive control gain, S(z) is a low-pass filter, Q(z) is a low-pass filter or a constant close to 1.

7. The compensation control method for a permanent magnet synchronous motor according to claim 1, **characterized in that**, the final output voltage $V_e$ after compensation control in the current cycle is acquired by the following formula:

$$V_e = V_P + V_L + V_R .$$

8. A compensation control system for a permanent magnet synchronous motor, **characterized in that** it comprises:

a motor current acquisition module, the motor current acquisition module configured to collect real-time three-phase currents ia, ib, ic of the permanent magnet synchronous motor;
an angular velocity acquisition module, the angular velocity acquisition module configured to collect real-time angular velocity of the permanent magnet synchronous motor;
an electrical angle acquisition module, the electrical angle acquisition module configured to collect real-time electrical angle of the permanent magnet synchronous motor;
a current coordinate transformation module, the current coordinate transformation module respectively connected with the motor current acquisition module and the electrical angle acquisition module, and configured to convert currents under a three-phase coordinate system to a d-axis actual output current id and a q-axis actual output current iq for the motor under a d-q coordinate system;
a PI control module, the PI control module connected with the angular velocity acquisition module and the current coordinate transformation module, and configured to perform PI control according to the real-time angular velocity, the d-axis actual output current id and the q-axis actual output current iq for the motor, and output a PI control output voltage $V_P$ to a final output voltage $V_e$ calculation module;
a disturbance compensation module, the disturbance compensation module connected with the current coordinate transformation module and the final output voltage $V_e$ calculation module, and configured to perform disturbance observation on the permanent magnet synchronous motor according to the d-axis actual output current id and the q-axis actual output current iq and output a disturbance compensation voltage $V_L$ to the final output voltage $V_e$ calculation module;
a repetitive control module, the repetitive control module connected with the PI control module, the current coordinate transformation module and the final output voltage $V_e$ calculation module, and configured to perform repetitive control according to the d-axis actual output current id and the q-axis actual output current iq and output a repetitive control output voltage $V_R$ to the final output voltage $V_e$ calculation module;
the final output voltage $V_e$ calculation module, the final output voltage $V_e$ calculation module respectively connected with the PI control module, the disturbance compensation module and the repetitive control module, and configured to acquire the final output voltage $V_e$ after compensation control in a current cycle.

9. The compensation control system for a permanent magnet synchronous motor according to claim 8, the PI control module comprising a first PI controller, a second PI controller and a third PI controller, **characterized in that**

the difference between the angular velocity and a target angular velocity is used as an input of the first PI controller, and an output of the first PI controller is used as a q-axis command current i* ;

the difference between the q-axis command current $i_q^*$ and the q-axis actual output current iq is used as an

**EP 4 395 159 A1**

input of the second PI controller, and an output of the second PI controller is used as a q-axis command voltage $U_q^p$;

the difference between an initial value of the d-axis command current $\overset{\cdot *}{i}_q$ and the d-axis actual output current id is used as an input of the third PI controller, and an output of the third PI controller is used as a d-axis command voltage $U_d^p$;

$$V_P = \begin{pmatrix} U_d^P \\ U_q^P \end{pmatrix}$$

wherein the PI control output voltage $V_p$ is: .

10. The compensation control system for a permanent magnet synchronous motor according to claim 8, the disturbance compensation module comprising a disturbance observer and a bandpass filter, the repetitive control module comprising a repetitive controller, **characterized in that** it comprises:

using the d-axis actual output current id and the q-axis actual output current iq as an input of the disturbance observer, and using an output of the disturbance observer as d-axis and q-axis reference voltages for disturbance observation;

using the difference between the final output voltage after compensation control in the previous cycle and the d-axis and q-axis reference voltages for disturbance observation as an input of the bandpass filter, and using an output of the bandpass filter as the disturbance compensation voltage $V_L$;

using the difference between the q-axis command current $\overset{\cdot *}{i}_q$ and the q-axis actual output current iq and the difference between an initial value of the d-axis command current $\overset{\cdot *}{i}_d$ and the d-axis actual output current id as an input of the repetitive controller, and using an output of the repetitive controller as the repetitive control output voltage $V_R$;

the final output voltage $V_e$ calculation module adding the PI control output voltage $V_P$, the disturbance compensation voltage $V_L$ and the repetitive control output voltage $V_R$, and using a sum of the addition as the final output voltage $V_e$.

24

| calculate PI control output voltage of the permanent magnet synchronous motor | S102 |

↓

| perform disturbance observation on the permanent magnet synchronous motor, and calculate disturbance compensation voltage of the permanent magnet synchronous motor | S104 |

↓

| calculate a repetitive control output voltage | S106 |

↓

| acquire a final output voltage after compensation control of a current cycle based on the PI control output voltage, the disturbance compensation voltage and the repetitive control output voltage | S108 |

Fig.1

Fig.2

Fig.3

Fig.4

Fig.5

Fig.6

Fig.7

Fig.8

Fig.9

Fig.10

Fig.11

Fig.12

## INTERNATIONAL SEARCH REPORT

| | International application No. |
|---|---|
| | **PCT/CN2022/097988** |

**A. CLASSIFICATION OF SUBJECT MATTER**

H02P 21/14(2016.01)i; H02P 21/13(2006.01)i; H02P 21/00(2016.01)i; H02P 25/022(2016.01)i; H02P 6/10(2006.01)i

According to International Patent Classification (IPC) or to both national classification and IPC

**B. FIELDS SEARCHED**

Minimum documentation searched (classification system followed by classification symbols)

H02P

Documentation searched other than minimum documentation to the extent that such documents are included in the fields searched

Electronic data base consulted during the international search (name of data base and, where practicable, search terms used)

CNABS, CNTXT, CNKI, SIPOABS, DWPI, USTXT: 永磁同步电机, 补偿, 谐波, 扰动, 干扰, 观测, 重复控制, 均衡, PMSM, permanent magnet synchronous motor, compensat+, harmonic, disturb+, observ+, repeat control, repetitive control, balance

**C. DOCUMENTS CONSIDERED TO BE RELEVANT**

| Category* | Citation of document, with indication, where appropriate, of the relevant passages | Relevant to claim No. |
|---|---|---|
| PX | CN 113708693 A (BEIJING NATIONAL NEW ENERGY VEHICLE TECH INNOVATION CENTER CO., LTD.) 26 November 2021 (2021-11-26)<br>claims 1-10 | 1-10 |
| Y | CN 112003545 A (HARBIN UNIVERSITY OF SCIENCE AND TECHNOLOGY) 27 November 2020 (2020-11-27)<br>description, paragraphs 45-89, and figures 1-3 | 1-10 |
| Y | CN 109861563 A (NANJING INSTITUTE OF TECHNOLOGY) 07 June 2019 (2019-06-07)<br>description, paragraphs 29-82, and figures 1-2 | 1-10 |
| Y | CN 106208859 A (XIANGTAN UNIVERSITY) 07 December 2016 (2016-12-07)<br>description, paragraphs 35-74, and figures 1-3 | 5, 10 |
| A | US 2004008006 A1 (HONDA MOTOR CO., LTD.) 15 January 2004 (2004-01-15)<br>entire document | 1-10 |
| A | JP 2017209012 A (FUJITSU GENERAL LTD.) 24 November 2017 (2017-11-24)<br>entire document | 1-10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 July 2022** | **23 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/097988** |

**C.     DOCUMENTS CONSIDERED TO BE RELEVANT**

| Category* | Citation of document, with indication, where appropriate, of the relevant passages | Relevant to claim No. |
| --- | --- | --- |
| A | 刘向辰 (LIU, Xiangchen). "“一种基于转矩扰动观测器+重复控制的船舶永磁同步电机矢量控制技术” (Vector Control of Marine Permanent Magnet Synchronous Motor Based on Torque Disturbance Observer and Repetitive Control)" 《电机与控制应用》 *(Electric Machines & Control Application),* No. 5, 31 May 2020 (2020-05-31), ISSN: 1673-6540,     entire document | 1-10 |

Form PCT/ISA/210 (second sheet) (January 2015)

INTERNATIONAL SEARCH REPORT
Information on patent family members

| International application No. |
| --- |
| **PCT/CN2022/097988** |

| Patent document cited in search report | | | Publication date (day/month/year) | Patent family member(s) | | | Publication date (day/month/year) |
| --- | --- | --- | --- | --- | --- | --- | --- |
| CN | 113708693 | A | 26 November 2021 | None | | | |
| CN | 112003545 | A | 27 November 2020 | None | | | |
| CN | 109861563 | A | 07 June 2019 | None | | | |
| CN | 106208859 | A | 07 December 2016 | CN | 106208859 | B | 28 April 2020 |
| US | 2004008006 | A1 | 15 January 2004 | JP | 2004048933 | A | 12 February 2004 |
| | | | | US | 6812659 | B2 | 02 November 2004 |
| | | | | JP | 3914107 | B2 | 16 May 2007 |
| JP | 2017209012 | A | 24 November 2017 | JP | 6489171 | B2 | 27 March 2019 |

Form PCT/ISA/210 (patent family annex) (January 2015)